# EUROPÄISCHE PATENTANMELDUNG

(11) **EP 3 506 144 A1**
(43) Veröffentlichungstag der Anmeldung: **03.07.2019**
(21) Anmeldenummer: 17211075.1
(22) Anmeldetag: 29.12.2017
(51) Int. Cl.: G06F 21/64, H04L 9/32, H04L 29/06, H04W 12/10

(54) **VERFAHREN UND SYSTEM ZUM ÜBERPRÜFEN EINER INTEGRITÄT EINER KOMMUNIKATION**

(71) Anmelder: Siemens Aktiengesellschaft, 80333 München (DE)
(72) Erfinder: Aschauer, Hans, 81829 München (DE); Fries, Steffen, 85598 Baldham (DE)

(57) **Zusammenfassung**

Verfahren zum Überprüfen einer Integrität einer Kommunikation umfassend eine Anzahl von k Nachrichten, mit:
Bereitstellen eines Start-Hashwerts als ein Anfangsglied einer Hashkette umfassend eine Abfolge von Hashwerten für die erste Einrichtung und die zweite Einrichtung,
Übertragen einer Abfolge der k Nachrichten zwischen der ersten Einrichtung und der zweiten Einrichtung,
Berechnen eines aktuellen Hashwerts der Hashkette mit einem jeden Übertragen der i-ten Nachricht in Abhängigkeit eines in der Hashkette dem aktuellen Hashwert vorhergehenden Hashwerts und von mit der i-ten Nachricht übertragenen Daten durch die erste Einrichtung und durch die zweite Einrichtung,
Übertragen einer k+1-ten Nachricht umfassend eine für den k-ten Hashwert indikative Information, und
Überprüfen der Integrität der Kommunikation in Abhängigkeit des von der die k+1-te Nachricht empfangenden Einrichtung berechneten k-ten Hashwerts und der empfangenen k+1-ten Nachricht durch die die k+1-te Nachricht empfangende Einrichtung.

## Beschreibung

Die vorliegende Erfindung betrifft ein Verfahren zum Überprüfen einer Integrität einer Kommunikation zwischen einer ersten Einrichtung und einer zweiten Einrichtung sowie ein System mit einer ersten Einrichtung und einer zweiten Einrichtung.

Es ist bekannt, dass eine digitale Datenübertragung zwischen zwei Einrichtungen, beispielsweise Netzwerkeinrichtungen, manipulierbar ist, wenn die zu übertragende Nachricht über einen oder mehrere Netzwerkknoten geleitet wird. Wenn die Nachricht im Klartext übertragen wird, kann prinzipiell jeder der Netzwerkknoten die zu übertragende Nachricht lesen und auch verändern, ohne dass dies von dem Empfänger der Nachricht erkannt wird.

Um eine solche Einflussnahme zu verhindern, sind verschiedene Möglichkeiten bekannt, eine Nachricht verschlüsselt zu übertragen, um das nicht autorisierte Lesen einer Nachricht zu verhindern. Ferner kann auch überprüfbar sein, ob die empfangene Nachricht auf dem Weg von dem Sender zu dem Empfänger verändert wurde oder ob sie unverändert ist. Dies erfolgt typischerweise mit einem Integritätsschutz. Beide Ansätze werden beispielsweise mit Protokollen zur sicheren Datenübertragung wie TLS (Transport Layer Security) oder auch IPSec (Internet Protocol Security) umgesetzt. Bei diesen Protokollen wird jede zu übertragende Nachricht verschlüsselt und/oder die Nachricht wird durch einen Message Authentication Code (MAC) oder auch Integritätscheckwert (ICV) integritätsgeschützt. Dies erhöht einerseits die Nachrichtengröße und andererseits muss eine jeweilige Netzwerkeinrichtung, die an einer solchen verschlüsselten Kommunikation teilhat, die Befähigung dazu aufweisen, das heißt das jeweilige Protokoll muss auf der Einrichtung implementiert sein. Insbesondere muss eine ausreichende Leistung und Bandbreite zur Verfügung stehen. Ferner müssen die Befehlssätze zur Ausführung der notwendigen Verarbeitungsschritte implementiert sein, weshalb diese Systeme relativ komplex aufgebaut sind.

Allerdings gibt es Anwendungen, bei denen diese Voraussetzungen nicht oder nicht immer gegeben sind oder es vorteilhaft wäre, eine jeweilige Einrichtung einfacher aufzubauen. Dennoch soll es möglich sein, die Kommunikation im Hinblick auf Sicherheitsaspekte zu überprüfen.

Vor diesem Hintergrund besteht eine Aufgabe der vorliegenden Erfindung darin, das Überprüfen einer Kommunikation zwischen zwei Einrichtungen zu verbessern.

Gemäß einem ersten Aspekt wird ein Verfahren zum Überprüfen einer Integrität einer Kommunikation zwischen einer ersten Einrichtung und einer zweiten Einrichtung umfassend eine Anzahl von k Nachrichten vorgeschlagen. In einem ersten Schritt wird ein Start-Hashwert als ein Anfangsglied einer Hashkette umfassend eine Abfolge von Hashwerten für die erste Einrichtung und die zweite Einrichtung bereitgestellt. In einem zweiten Schritt wird eine Abfolge der k Nachrichten zwischen der ersten Einrichtung und der zweiten Einrichtung übertragen, wobei das Übertragen einer i-ten Nachricht der k Nachrichten, mit 1 ≤ i ≤ k, ein Senden und/oder ein Empfangen der i-ten Nachricht umfasst. In einem dritten Schritt wird ein aktueller Hashwert der Hashkette mit einem jeden Übertragen der i-ten Nachricht in Abhängigkeit eines in der Hashkette dem aktuellen Hashwert vorhergehenden Hashwerts und von mit der i-ten Nachricht übertragenen Daten durch die erste Einrichtung und durch die zweite Einrichtung berechnet. In einem vierten Schritt wird eine k+1-te Nachricht umfassend eine für den k-ten Hashwert indikative Information übertragen. In einem fünften Schritt wird die Integrität der Kommunikation in Abhängigkeit des von der die k+1-te Nachricht empfangenden Einrichtung berechneten k-ten Hashwerts und der empfangenen k+1-ten Nachricht durch die die k+1-te Nachricht empfangende Einrichtung überprüft.

Dieses Verfahren ermöglicht es in vorteilhafter Weise, Nachrichten zu übertragen und die Integrität der Kommunikation zu überprüfen, ohne dass jede einzelne Nachricht aufwendig geschützt wird. Dadurch können die erste und die zweite Einrichtung einfacher aufgebaut sein, da eine benötigte Rechenleistung sowie elektrische Leistung gering sind. Ferner können die Nachrichten einfacher aufgebaut sein und benötigen keinen großen Overhead, wodurch ein Kommunikationskanal zwischen den beiden Einrichtungen entlastet wird und somit ebenfalls einfacher ausgebildet werden kann. Insgesamt sinken mit diesem Verfahren daher die Anforderungen an die erste und zweite Einrichtung, wodurch sich Herstellungs- und Betriebskosten deutlich reduzieren lassen. Dennoch bietet das Verfahren eine hohe Zuverlässigkeit der Kommunikation und eine hohe Betriebssicherheit. Das Verfahren eignet sich daher insbesondere im IoT-Bereich (Internet der Dinge, von engl. "Internet of Things").

Unter der Integrität der Kommunikation wird beispielsweise verstanden, dass eine Veränderung von Nachrichten auf einem Transportweg zwischen der ersten Einrichtung und der zweiten Einrichtung bei dem jeweiligen Empfänger entdeckt werden kann. Ferner kann ein Verlust von Nachrichten in der Kommunikation entdeckt werden und eine Synchronisation zwischen der ersten Einrichtung und der zweiten Einrichtung kann sichergestellt werden.

Unter einer Nachricht wird vorliegend insbesondere ein digitales Datenpaket, beispielsweise eine Folge von Nullen und Einsen, die auch als Bits bezeichnet werden, mit einer bestimmten Länge verstanden. Beispielsweise weist eine Nachricht eine maximale Länge von 80 kBit (Kilobit) auf, was einer Datenmenge von 10 kB (Kilobyte) entspricht. Eine Nachricht weist beispielsweise einen Nutzdatenteil, wie einen ausführbaren Befehl, wie das Aktivieren einer mechanischen Funktionseinheit, eine Konfigurationsinformation, einen Abfragebefehl und/oder dergleichen, auf und kann ferner weitere Bestandteile, wie zum Beispiel einen Integritätscheckwert (ICV, von engl. *"integrity check value")* in Form einer digitalen Signatur, einen Hashwert oder dergleichen aufweisen.

Die erste und/oder zweite Einrichtung kann hardwaretechnisch und/oder auch softwaretechnisch implementiert sein. Bei einer hardwaretechnischen Implementierung kann die jeweilige Einrichtung zum Beispiel als Computer oder als Mikroprozessor ausgebildet sein. Bei einer softwaretechnischen Implementierung kann die jeweilige Einrichtung als Computerprogrammprodukt, als eine Funktion, als eine Routine, als Teil eines Programmcodes oder als ausführbares Objekt ausgebildet sein.

Ein Hashwert ist insbesondere eine Bitfolge mit einer bestimmten Länge, beispielsweise 128 Bit, 160 Bit, 256 Bit, 384 Bit, oder auch 512 Bit. Ein Hashwert lässt sich beispielsweise mittels einer Hashfunktion aus einer beliebigen Nachricht erzeugen oder berechnen. Die Hashfunktion bildet dabei die Nachricht, die eine beliebige Länge haben kann, auf den Hashwert mit fester Länge ab. Diese Abbildung ist vorzugsweise eindeutig. Eine solche Hashfunktion wird beispielsweise als kollisionsresistent bezeichnet. Hierunter wird beispielsweise verstanden, dass es keine zwei sich unterscheidende Nachrichten gibt, die den gleichen Hashwert ergeben. Der Hashwert einer bestimmten Nachricht kann daher auch als "fingerprint" (Fingerabdruck) bezeichnet werden. Beispiele von Hashfunktionen, auch als Hash-Algorithmus bezeichnet, sind MD5 oder SHA. Beispielsweise bezeichnet SHA-256 den SHA Hash-Algorithmus, wobei ein jeweiliger Hashwert eine Länge von 256 Bit aufweist. Ein Hashwert kann auch als Schlüssel in weiteren kryptographischen Funktionen genutzt werden. Eine weitere Familie von Hashfunktionen ist unter dem Namen "Salsa20" zusammengefasst, wobei beispielsweise "ChaCha" dazu gehört.

Unter dem Start-Hashwert ist insbesondere ein Anfangsglied einer Hashkette zu verstehen. Dieses Anfangsglied ist nicht unbedingt ein Hashwert, der durch Berechnung einer Hashfunktion über eine bestimmte Nachricht berechnet wurde, sondern kann auch fest vorgegeben, insbesondere beliebig wählbar, sein. Nachfolgend ist unter dem Begriff Start-Hashwert insbesondere das Anfangsglied der Hashkette zu verstehen. Der Start-Hashwert kann insbesondere vorbestimmt sein. Der Start-Hashwert kann auch geheim sein, das heißt, dass nur die erste und die zweite Einrichtung diesen kennen. Der Start-Hashwert kann auch mittels eines Verfahrens zum Erzeugen eines geheimen Schlüssels, wie beispielsweise Diffie-Hellmann, beim Beginn einer Kommunikation zwischen den beiden Einrichtungen erzeugt werden. Der Anfang der Kommunikation, umfassend eine zugeordnete Aushandlungsphase zur Aushandlung kommunikationsspezifischer, insbesondere kryptographischer, Parameter, wird zum Beispiel auch als Handshake bezeichnet.

Der Start-Hashwert bildet insbesondere das Anfangsglied der Hashkette. Unter der Hashkette wird beispielsweise eine Abfolge von Hashwerten verstanden. Dabei geht insbesondere der in der Hashkette vorhergehende Hashwert in die Berechnung des aktuellen Hashwerts ein, wie es beispielsweise bei einer rekursiven Funktion der Fall ist. Beispielsweise lässt sich der aktuelle Hashwert der Hashkette berechnen, indem die Hashfunktion mit der aktuell empfangenen Nachricht und dem vorhergehenden Hashwert der Hashkette als Eingangsgrößen berechnet wird. Dabei kann zum Beispiel der vorhergehende Hashwert einfach an die Nachricht angefügt werden, wodurch eine veränderte Nachricht erzeugt wird, von welcher veränderten Nachricht der aktuelle Hashwert mittels der Hashfunktion berechnet wird.

Neben reinen Hashfunktionen können schlüsselabhängige Hashfunktionen, wie HMAC, verwendet werden, bei denen zusätzlich zur eigentlichen Nachricht ein Schlüsselwert mit in die Berechnung des Hashwertes einfließt. In einer Variante kann der vorhergehende Hashwert einer Nachricht auch als Schlüssel für die Berechnung eines HMAC der aktuellen Nachricht genutzt werden.

Die erste und die zweite Einrichtung sind zum Übertragen von Nachrichten, das heißt jeweils zum Senden und zum Empfangen von Nachrichten, eingerichtet. Bei jedem Übertragen einer Nachricht berechnen die erste und die zweite Einrichtung den aktuellen Hashwert der Hashkette.

Zum Beispiel sendet zu Beginn der Kommunikation die erste Einrichtung eine erste Nachricht an die zweite Einrichtung. Wenn die erste Einrichtung die erste Nachricht sendet, berechnet sie zugleich den aktuellen Hashwert basierend auf der ersten Nachricht und dem Start-Hashwert, wobei der berechnete Hashwert der aktuelle Hashwert der Hashkette und das erste Glied der Hashkette nach dem Anfangsglied darstellt. Das Berechnen des aktuellen Hashwerts kann dabei vor dem Senden oder nach dem Senden erfolgen. Die zweite Einrichtung empfängt die erste Nachricht und berechnet ebenfalls den aktuellen Hashwert, der auf der empfangenen ersten Nachricht und dem Start-Hashwert basiert. Bei der Berechnung eines jeweiligen Hashwerts verwenden die erste und die zweite Einrichtung insbesondere die gleiche Hashfunktion.

Dieses Beispiel macht deutlich, dass die erste und die zweite Einrichtung unabhängig voneinander jeweils den aktuellen Hashwert berechnen und demnach jeweils eine individuelle Hashkette aufweisen. Man kann auch von einer lokalen Hashkette sprechen. Sofern die Übertragung der Nachricht unverfälscht erfolgt, sollten der aktuelle Hashwert der ersten Einrichtung und der aktuelle Hashwert der zweiten Einrichtung gleich sein, womit auch die Hashkette der ersten Einrichtung und die Hashkette der zweiten Einrichtung identisch sein sollten. Andererseits wird sich der aktuelle Hashwert der ersten Einrichtung von dem aktuellen Hashwert der zweiten Einrichtung unterscheiden, falls aufgrund eines Übertragungsfehlers oder einer Manipulation die empfangene Nachricht nicht identisch mit der gesendeten Nachricht ist.

Um zu überprüfen, ob die Kommunikation zwischen der ersten und der zweiten Einrichtung vollständig und unverfälscht ist, wird beispielsweise der aktuelle Hashwert verglichen. Im einfachsten Fall überträgt die erste Einrichtung den Hashwert, der zuletzt berechnet wurde, an die zweite Einrichtung. Dies kann beispielsweise in einem dafür vorgesehenen Protokollfeld erfolgen. Die zur Überprüfung gesendete Nachricht kann damit neben Nutzdaten auch den Hashwert aufweisen. Wenn zehn Nachrichten übertragen wurden, dann wird beispielsweise das zehnte Glied der lokalen Hashkette der ersten Einrichtung, welches dem zehnten berechneten Hashwert entspricht, mit einer elften Nachricht übertragen. Die zweite Einrichtung vergleicht den empfangenen Hashwert mit dem zehnten Glied ihrer lokalen Hashkette. Wenn die beiden Hashwerte identisch sind, ist sichergestellt, dass die vorangehenden zehn Nachrichten korrekt und unverändert übertragen wurden. Somit ist die Integrität der Kommunikation sichergestellt. Man kann auch sagen, dass die unveränderte Übertragung der Daten verifiziert wurde.

Vorteilhaft wird der Hashwert zur Überprüfung nicht im Klartext übertragen, sondern eine für den Hashwert indikative Information. Dies kann beispielsweise ein weiterer Hashwert sein, der durch Berechnung der Hashfunktion mit dem zu überprüfenden Hashwert als Eingangsparameter und/oder weiterer Eingangsparameter, insbesondere der zu übertragenden Nachricht, erzeugt wird. Ein Beispiel hierfür ist das oben bereits genannte HMAC, das auch als schlüsselabhängige Hashfunktion oder Keyed-Hash Message Authentication Code bezeichnet wird. HMAC ist zum Beispiel in RFC 2104 oder in FIPS 198 spezifiziert. Die Verwendung von beispielsweise HMAC-SHA-256, das heißt HMAC unter Verwendung eines SHA-256 Schlüssels, ist insbesondere vorteilhaft, wenn SHA-256 zur Berechnung der Hashwerte genutzt wird, da die Hash-Algorithmus SHA-256 dann ohnehin implementiert ist. Durch diese doppelte Verwendung der Hashfunktion kann ein Implementierungsaufwand gering gehalten werden.

Dieses Verfahren unterscheidet sich von bekannten Authentifizierungsverfahren, wie beispielsweise TLS, dadurch, dass jede übertragene Nachricht, insbesondere also auch außerhalb des Handshakes übertragene Nachrichten, in den aktuellen Hashwert eingeht. Dies kann auch als Running-Hash-Verfahren bezeichnet werden. Insbesondere wird die Hashkette bei fortgesetzter Kommunikation auch nach einer Integritätsprüfung fortgesetzt. Das heißt, dass auch die Nachrichten, die zur Überprüfung der Integrität übertragen werden, in die Hashkette mit einfließen**.** Demnach kann jederzeit die gesamte in der Vergangenheit liegende Kommunikation durch die Überprüfung des aktuellen Hashwerts verifiziert werden.

Gemäß einer Ausführungsform des Verfahrens erfolgt das Übertragen der k Nachrichten zwischen der ersten Einrichtung und der zweiten Einrichtung sequenziell.

Unter sequenziell wird insbesondere verstanden, dass Nachrichten einer Mehrzahl an Nachrichten zeitlich voneinander getrennt nacheinander übertragen werden. Man kann auch sagen, dass die Kommunikation seriell erfolgt. Dies ist beispielsweise bei einer seriellen Schnittstelle gegeben.

In Ausführungsformen kann ferner vorgesehen sein, dass die Kommunikation immer wechselseitig erfolgt. Hierunter wird beispielsweise verstanden, dass auf jede gesendete Nachricht eine Antwortnachricht von dem Empfänger der gesendeten Nachricht gesendet wird. Die Antwortnachricht kann dabei insbesondere als Empfangsbestätigung der gesendeten Nachricht dienen. Ferner lässt sich beispielsweise durch Zeitablauf das Bestehen der Kommunikationsverbindung ableiten.

Gemäß einer weiteren Ausführungsform des Verfahrens erfolgt das Bereitstellen des Start-Hashwerts kryptographisch gesichert.

Dies ermöglicht eine erhöhte Sicherheit für die Kommunikation, da nur die erste und die zweite Einrichtung den Start-Hashwert kennen.

Unter kryptographisch gesichert oder auch kryptographisch geschützt wird mitunter verstanden, dass kryptographische Verfahren zum Einsatz kommen. Kryptographische Verfahren umfassen beispielsweise asymmetrische Verschlüsselungsverfahren sowie symmetrische Verschlüsselungsverfahren. Darunter fallen zum Beispiel RSA *(Rives, Shamir, Adleman*)*,* ECDSA *(Elliptic Curve Digital Signature Algorithm),* AES *(Advanced Encryption Standard),* GMAC *(Galois Message Authentication Code)* sowie das Diffie-Hellman-Verfahren zum Erzeugen eines Schlüssels.

Kryptographisch gesichert kann ferner bedeuten, dass eine zu übertragende Nachricht derart verschlüsselt wird, dass nur der bestimmte Empfänger der Nachricht diese entschlüsseln und damit lesen kann und/oder dass eine Nachricht mit einer digitalen Signatur übertragen wird, so dass der Empfänger feststellen kann, ob die empfangene Nachricht tatsächlich von dem bestimmten Sender versendet wurde und dass die Nachricht während des Übertragens nicht verändert wurde.

Kryptographisch gesichertes Übertragen kann dabei durch ein Sicherheitsprotokoll, wie beispielsweise TLS *(Transport Layer Security),* SSL *(Secure Socket Layer),* SSH *(Secure Shell),* IPSec (*Internet Protocol Security)* realisiert werden, das den gesamten Datenaustausch sichert. Alternativ können Verfahren auf höheren Schichten des OSI-Modells genutzt werden, wie zum Beispiel S/MIME beim Austausch von gesicherten E-Mails. Dieser kryptographisch geschützte Austausch der Nachricht oder Information ist dabei insbesondere asynchron zu dem eigentlichen Verfahren, das heißt er kann zu einer anderen Zeit stattfinden, als der eigentliche Nutzdatenaustausch, der mit dem beschriebenen Verfahren gesichert ist.

Gemäß einer weiteren Ausführungsform des Verfahren umfasst dieses ferner den Schritt: Gegenseitiges Authentisieren der ersten Einrichtung und der zweiten Einrichtung.

Das Authentisieren kann jederzeit durchgeführt werden. Bevorzugt wird es beispielsweise beim Aufbau der Kommunikationsverbindung, noch bevor Nachrichten mit Nutzdaten übertragen werden, durchgeführt. Hiermit wird sichergestellt, dass die Unverfälschtheit der Nachrichten, die von der vorgesehenen Einrichtung empfangen werden, nachgewiesen werden kann. Dies ist insbesondere in Netzwerken mit einer Vielzahl an Einrichtungen vorteilhaft. Damit lässt sich die Sicherheit und Zuverlässigkeit des Verfahrens weiter erhöhen.

Das Authentisieren umfasst insbesondere kryptographische Authentisierungsverfahren. Beispielsweise werden digitale Signaturen eingesetzt. Dabei ist jeder Einrichtung ein privater Schlüssel zur Erzeugung der digitalen Signatur zugeordnet, wobei die digitale Signatur über eine erste Nachricht erzeugt wird. Diese erste Nachricht kann beispielsweise lediglich die Anfrage zum Starten einer Kommunikation umfassen, alternativ kann die erste Nachricht auch bereits Nutzdaten umfassen. Die andere Einrichtung, die diese erste Nachricht empfängt, kann mittels eines dem privaten Schlüssel zugehörigen öffentlichen Schlüssels die Urheberschaft der Nachricht überprüfen. Dies wird auch als Public-Key-Kryptosystem bezeichnet. Insbesondere gehen auch die zur Authentisierung übertragenen Nachrichten in die Hashkette ein, das heißt, dass auch mit dem Übertragen der Nachrichten zur Authentisierung jeweils ein aktueller Hashwert berechnet wird.

Gemäß einer weiteren Ausführungsform des Verfahrens erfolgt das Authentisieren in Abhängigkeit des aktuellen Hashwerts der Hashkette.

Mit dieser Ausführungsform lassen sich unterschiedliche sicherheitserhöhende Maßnahmen kombinieren und so eine noch größere Sicherheit erreichen. Beispielsweise erfolgt das Bereitstellen des Start-Hashwerts bereits kryptographisch gesichert. Ferner erfolgt beispielsweise eine Authentisierung mittels einer digitalen Signatur. Dabei wird der aktuelle Hashwert der Hashkette, bei der ersten Nachricht der Kommunikation wäre dies der Start-Hashwert, bei der zu signierenden Nachricht berücksichtigt, beispielsweise wird zuerst ein ICV als HMAC-SHA-256-Wert zu der Nachricht mittels des Hashwerts erzeugt und anschließend wird der ICV digital signiert.

Gemäß einer weiteren Ausführungsform des Verfahrens erfolgt das Berechnen des aktuellen Hashwerts von der ersten Einrichtung und der zweiten Einrichtung individuell und unabhängig voneinander.

Insbesondere ist hierdurch sichergestellt, dass Manipulationen von Nachrichten oder Übertragungsfehler erkannt werden können.

Gemäß einer weiteren Ausführungsform des Verfahrens weist dieses den Schritt auf: Übertragen einer k+2-ten Nachricht umfassend eine für den k+1-ten Hashwert indikative Information, und Überprüfen der Integrität der Kommunikation in Abhängigkeit des von der die k+2-te Nachricht empfangenden Einrichtung berechneten k+1-ten Hashwerts und der empfangenen k+2-ten Nachricht durch die die k+2-te Nachricht empfangende Einrichtung.

Dies ermöglicht es insbesondere, dass beide Einrichtungen jeweils für sich genommen die Integrität der Kommunikation überprüfen. Bevorzugt erfolgt dieser Schritt direkt anschließend an das Übertragen der k+1-ten Nachricht. Beispielsweise überträgt die erste Einrichtung die k+1-te Nachricht an die zweite Einrichtung. Die zweite Einrichtung kann damit die Integrität der Kommunikation überprüfen. Anschließend sendet die zweite Einrichtung die k+2-te Nachricht an die erste Einrichtung, wodurch die erste Einrichtung die Integrität der Kommunikation überprüfen kann.

Gemäß einer weiteren Ausführungsform des Verfahrens erfolgt das Übertragen der k+1-ten Nachricht umfassend die für den k-ten Hashwert indikative Information und/oder das Übertragen der k+2-ten Nachricht umfassend die für den k+1-ten Hashwert indikative Information kryptographisch geschützt.

Beispielsweise werden die k+1-te Nachricht und die k+2-te Nachricht verschlüsselt übertragen. Dabei kann ein symmetrisches oder auch ein asymmetrisches Verschlüsselungsverfahren verwendet werden.

In Ausführungsformen kann auch lediglich die für den jeweiligen Hashwert indikative Information kryptographisch geschützt übertragen werden. Beispielsweise wird ein HMAC-SHA-256 der Nachricht mit dem jeweiligen Hashwert der Vorgängernachricht als Schlüssel erzeugt.

Dies hat den Vorteil, dass ein Angreifer, der sich in den Übertragungsweg zwischenschaltet (Man-in-the-middle), den eigentlichen Hashwert zur Überprüfung nicht mitlesen kann, da dieser nur als Schlüssel zur Berechnung des ICV der Nachricht genutzt wurde. Damit wird die Sicherheit der Überprüfung erhöht.

Gemäß einer weiteren Ausführungsform des Verfahrens weist jede der k+2 Nachrichten eine bestimmte Priorität aus einer Mehrzahl von vorbestimmten Prioritäten auf, wobei verschiedene Nachrichten in Abhängigkeit ihrer jeweiligen Priorität übertragen und/oder verarbeitet werden.

Nachrichten mit verschiedenen Prioritäten werden mitunter unterschiedlich behandelt. Ein Beispiel für eine Nachrichtenübertragung mit unterschiedlicher Priorität ist die Dienstgüte oder auch Quality of Service, wie es in der Norm IEEE 802.1p beschrieben ist.

Dabei werden Nachrichten mit einer höheren Priorität bevorzugt behandelt, beispielsweise weitergeleitet. Vor allem bei zeitkritischen Nachrichten in Echtzeitanwendungen kann dies enorm wichtig sein. Ein Beispiel hierfür sind Sensordaten bei Automobilen. Beispielsweise ist es für ein korrektes Funktionieren eines Anti-Blockier-Systems notwendig, dass die Sensordaten eines die Radrotation erfassenden Sensors in Echtzeit zur Verfügung stehen. Ein weiteres Beispiel sind Sicherheitsschaltungen in Kraftwerken oder Umspannwerken. Wenn eine kritische Betriebssituation auftritt, ist ein Auslösen von Schutzgeräten, beispielsweise Sicherungen, möglicherweise lebensrettend, weshalb ein entsprechendes Auslösesignal mit höchster Priorität übertragen werden sollte.

Je nach Anwendung kann eine Überprüfung der Integrität der Kommunikation einen hohen oder auch einen geringen Stellenwert einnehmen. In den vorstehend beschriebenen Beispielen wäre die Überprüfungsnachricht eine Nachricht mit geringerer Priorität, als beispielsweise die Nachricht mit dem Auslösesignal für die Sicherungen. Andererseits wäre beispielsweise bei einer Banking-Anwendung das Überprüfen der Integrität der Kommunikation von höherer Wichtigkeit.

Ein Beispiel für ein Protokoll mit einer Priorisierungsmöglichkeit ist GOOSE *(Generic Object Oriented Substation Event)* durch verschiedene Nachrichtentypen. Auch Telecontrol mit IEC 60870-5-101/104 mit dem dazugehörigen Sicherheitsstandard IEC 62351-5 bietet eine Möglichkeit, kritische Operationen besonders abzusichern.

Gemäß einer weiteren Ausführungsform des Verfahrens erfolgt das Berechnen des i-ten Hashwerts zusätzlich in Abhängigkeit einer vorbestimmten Information.

Hierdurch lässt sich die Zuverlässigkeit des Verfahrens weiter erhöhen. Die vorbestimmte Information umfasst beispielsweise eine Gerätenummer, einen Hersteller, einen Softwarestand und dergleichen. Insbesondere kann auch ein mittels eines zusätzlichen Schlüsselaustauschs, zum Beispiel nach dem Diffie-Hellmann-Verfahren, erhaltener Schlüssel die vorbestimmte Information sein.

Gemäß einer weiteren Ausführungsform des Verfahrens weist dieses ferner auf: Zwischenspeichern einer Anzahl von m Hashwerten der Hashkette durch die erste Einrichtung und die zweite Einrichtung, wobei die Anzahl den aktuellen Hashwert und die m-1 dem aktuellen Hashwert vorhergehenden Hashwerte der Hashkette umfasst, wobei jedem zwischengespeicherten Hashwert ein Index zugeordnet wird. In einem weiteren Schritt wird derjenige Hashwert aus der Anzahl von m Hashwerten ausgewählt, der mit der zuletzt empfangenen Nachricht berechnet wurde. In einem anschließenden Schritt wird die k+1-te Nachricht umfassend eine für den ausgewählten Hashwert indikative Information und der dem ausgewählten Hashwert zugeordneten Index übertragen. Abschließend wird die Integrität der Kommunikation in Abhängigkeit des von der die k+1-te Nachricht empfangenden Einrichtung zwischengespeicherten Hashwerts, dem der Index zugeordnet ist, und der empfangenen k+1-ten Nachricht durch die die k+1-te Nachricht empfangende Einrichtung überprüft.

Diese Ausführungsform ermöglicht es vorteilhaft, dass das Verfahren bei nichtverlässlicher Kommunikation, wie beispielsweise bei UDP (User Datagramm Protocol) in IP-Netzen, eine erhöhte Verlässlichkeit bietet. Beispielsweise führt eine verlorene Nachricht, die zwar versendet aber nicht empfangen wird, dazu, dass der aktuelle Hashwert der lokalen Hashkette auf der ersten Einrichtung und der zweiten Einrichtung unterschiedlich sind. Daher wird bei dem Überprüfen der Integrität der Kommunikation festgestellt, dass seit dem Beginn der Kommunikation oder seit dem letzten Überprüfen etwas schiefgelaufen ist. Mit den zusätzlichen Verfahrensschritten lässt sich in bestimmten Fällen zumindest ein Teil der vorangehenden Kommunikation verifizieren. Darüber hinaus ermöglicht die explizite Verwendung einer indikativen Information eine Synchronisation von Sender und Empfänger bezüglich des auf beiden Seiten verfügbaren Hashwertes.

Das Zwischenspeichern der Hashwerte erfolgt insbesondere in einem Cache. Der Cache ist beispielsweise als ein volatiler Speicher, wie RAM *(Random Access Memory),* ausgebildet.

Beispielsweise sendet die erste Einrichtung eine Nachricht an die zweite Einrichtung, die jedoch von dieser nicht empfangen wird. Da die zweite Einrichtung innerhalb eines bestimmten Zeitfensters keine Nachricht von der ersten Einrichtung empfängt, startet sie einen Integritätscheck, indem sie die k+1-te Nachricht zur Überprüfung sendet. Die erste Einrichtung empfängt diese Nachricht, die den Index des ausgewählten Hashwerts und die für den ausgewählten Hashwert indikative Information umfasst. Der von der zweiten Einrichtung ausgewählte Hashwert ist beispielsweise der k-1-te Hashwert. Daraufhin führt die erste Einrichtung die Überprüfung der Kommunikation auf Basis des ausgewählten Hashwerts durch. Der ausgewählte Hashwert entspricht dem k-2-ten Hashwert der ersten Einrichtung, da diese durch das Senden der nicht übertragenen Nachricht eine Iteration oder einen Schritt weiter ist. Die erste Einrichtung erkennt in diesem Fall, dass die beiden Hashwerte gleich sind. Daraus folgt, dass die Kommunikation bis zu dieser Nachricht integer war. Die beiden vorhergehenden Hashwerte mit dem Index k-1 und k werden von der ersten Einrichtung jedoch verworfen, da diese nicht verifiziert werden konnten. Auf diese Weise konnte daher trotz eines Übertragungsfehlers ein Teil der Kommunikation verifiziert werden. Es lässt sich daher eine Effizienz des Verfahrens auch bei nichtverlässlichen Protokollen erhöhen.

Gemäß einer weiteren Ausführungsform des Verfahrens wird die Anzahl an zwischenzuspeichernden Hashwerten in Abhängigkeit eines Parameterwerts eines vorgegebenen Parameters dynamisch angepasst, wobei der vorgegebene Parameter ein eine Qualität einer Kommunikationsverbindung zwischen der ersten Einrichtung und der zweiten Einrichtung beschreibenden Parameter, ein Ladezustand einer Energieversorgung für eine der Einrichtungen, eine Anzahl von Einrichtungen in einem Netzwerk umfassend eine Mehrzahl an Einrichtungen, und/oder eine Routing-Information umfasst.

Dieses Verfahren erlaubt vorteilhaft in Abhängigkeit von bestimmten Bedingungen einen ressourcenschonenden Betrieb. Beispielsweise kann bei einer sehr zuverlässigen Verbindung, auch wenn diese über ein nichtverlässliches Protokoll besteht, die Anzahl von zwischengespeicherten Hashwerten auf den aktuellen Wert beschränkt werden.

Gemäß einer weiteren Ausführungsform des Verfahrens sind die erste Einrichtung und die zweite Einrichtung dazu eingerichtet, innerhalb eines bestimmten Zeitintervalls nach dem Empfangen einer Nachricht eine weitere Nachricht zu senden. Auf diese Weise lässt sich insbesondere sicherstellen, dass die Kommunikation oder auch die Kommunikationsverbindung weiterhin besteht. Insbesondere lässt sich basierend auf der verstrichenen Zeit eine Überprüfung der Kommunikation auslösen oder triggern. Ein Überschreiten des Zeitintervalls kann auch als Timeout bezeichnet werden.

Gemäß einer weiteren Ausführungsform des Verfahrens wird der Schritt des Überprüfens in Abhängigkeit einer der folgenden Bedingungen durchgeführt oder durch das Eintreten eines bestimmten Ereignisses getriggert. Das Ereignis umfasst ein Verstreichen einer bestimmten Zeitdauer seit dem Bereitstellen des Start-Hashwerts, ein Verstreichen einer bestimmten Zeitdauer seit dem Übertragen der ersten Nachricht, ein Verstreichen einer bestimmten Zeitdauer seit dem letzten Empfangen einer Nachricht, ein Übertragen einer Nachricht mit einer vorbestimmten Priorität, eine Anfrage zum Überprüfen und/oder ein Erreichen einer vorbestimmten Anzahl k an übertragenen Nachrichten.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem weiteren Aspekt wird ein System mit einer ersten Einrichtung und einer zweiten Einrichtung vorgeschlagen, wobei die erste Einrichtung und die zweite Einrichtung zur Kommunikation miteinander eingerichtet sind. Das System zeichnet sich dadurch aus, dass die erste Einrichtung und die zweite Einrichtung zum Überprüfen der Integrität der Kommunikation mittels des Verfahrens nach dem ersten Aspekt eingerichtet sind.

Die für das vorgeschlagene Verfahren beschriebenen Ausführungsformen und Merkmale gelten für das vorgeschlagene System entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

In den Figuren sind gleiche oder funktionsgleiche Elemente mit denselben Bezugszeichen versehen worden, sofern nichts anderes angegeben ist.
- Fig. 1: zeigt ein schematisches Blockschaltbild eines Ausführungsbeispiels eines Systems mit zwei Einrichtungen;
- Fig. 2: zeigt ein schematisches Blockschaltbild eines Ausführungsbeispiels für ein Verfahren zum Überprüfen einer Integrität einer Kommunikation;
- Fig. 3: zeigt ein schematisches Diagramm eines Ausführungsbeispiels einer Kommunikation zwischen zwei Einrichtungen; und
- Fig. 4: zeigt ein schematisches Diagramm eines weiteren Ausführungsbeispiels einer Kommunikation zwischen zwei Einrichtungen.

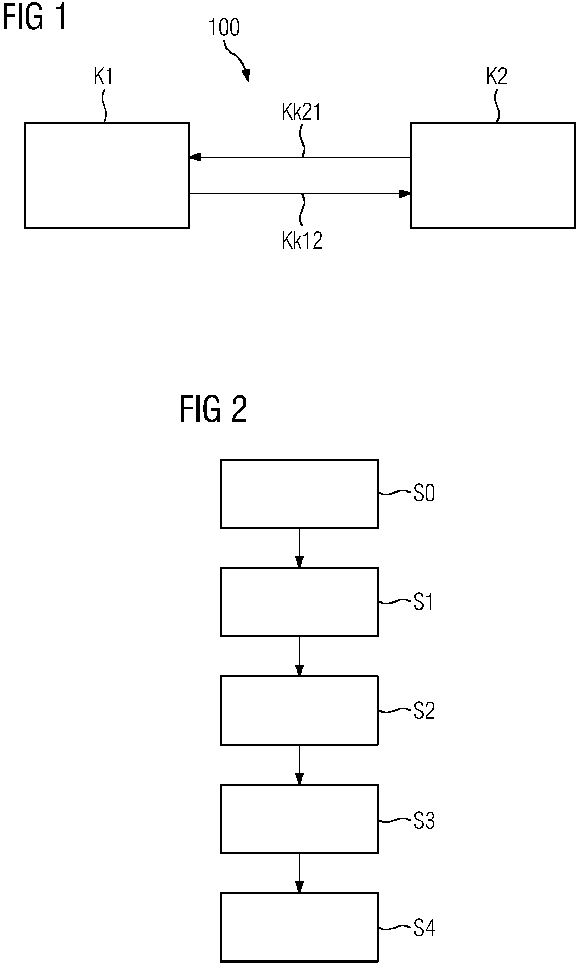

Fig. 1 zeigt ein schematisches Blockschaltbild eines Ausführungsbeispiels eines Systems 100 mit einer ersten Einrichtung K1 und einer zweiten Einrichtung K2. Die erste Einrichtung K1 und die zweite Einrichtung K2 sind zur Kommunikation miteinander und zum Überprüfen der Integrität der Kommunikation eingerichtet. Beispielhaft sind in der Fig. 1 daher zwei Kommunikationskanäle Kk12 und Kk21 dargestellt. Der Kommunikationskanal Kk12 dient beispielsweise der ersten Einrichtung K1 zum Senden einer Nachricht an die zweite Einrichtung K2. Der Kommunikationskanal Kk21 dient beispielsweise der zweiten Einrichtung K2 zum Senden einer Nachricht an die erste Einrichtung K1. Die Kommunikationskanäle Kk12, Kk21 sind hier aus Gründen der Übersicht ohne Beschränkung der Allgemeinheit getrennt dargestellt. Die erste Einrichtung K1 ist beispielsweise als eine zentrale Steuerungsvorrichtung ausgebildet und die zweite Einrichtung K2 ist beispielsweise als ein Feldgerät ausgebildet.

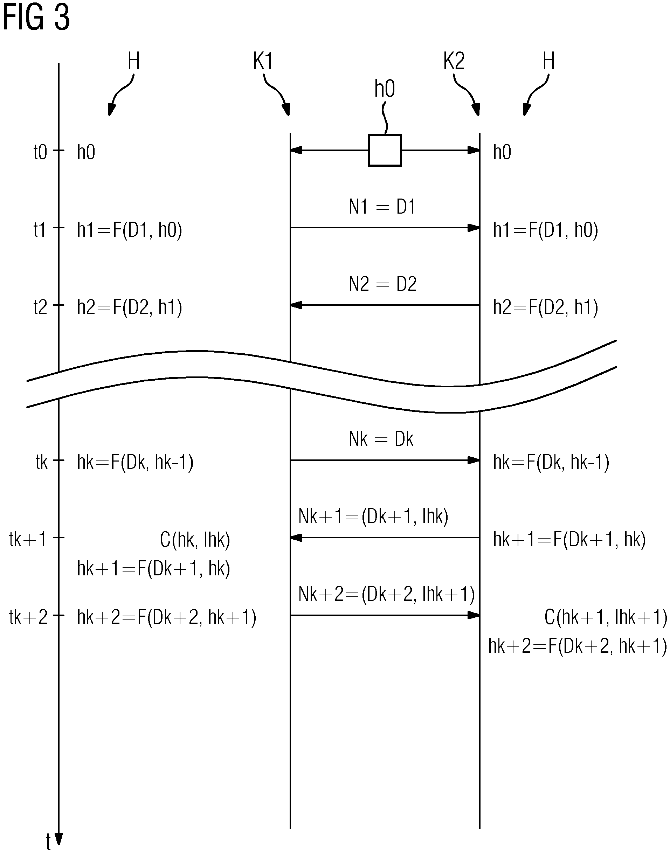

Nachfolgend wird anhand der Fig. 2 und Fig. 3 erläutert, wie eine Kommunikation zwischen der ersten Einrichtung K1 und der zweiten Einrichtung K2 erfolgen kann und wie die Integrität der Kommunikation überprüft wird. Dabei zeigt die Fig. 2 ein schematisches Blockschaltbild eines Ausführungsbeispiels eines Verfahrens mit fünf Verfahrensschritten S0 - S4 und die Fig. 3 zeigt entlang einer in der Fig. 3 nach unten gerichteten Zeitachse t ein Ausführungsbeispiel für eine Kommunikation zwischen zwei Einrichtungen K1, K2.

Die Fig. 2 zeigt beispielsweise ein schematisches Blockschaltbild eines Ausführungsbeispiels für ein Verfahren zum Überprüfen einer Integrität einer Kommunikation der Kommunikation zwischen der ersten Einrichtung K1 und der zweiten Einrichtung K2 der Fig.1. In einem vorbereitenden Verfahrensschritt S0 wird der ersten Einrichtung K1 und der zweiten Einrichtung K2 ein Start-Hashwert h0 (siehe auch Fig.3) bereitgestellt. Dies erfolgt insbesondere kryptographisch geschützt. Dies ist in der Fig. 3 zu einem Zeitpunkt t0 dargestellt. Ferner sind in der Fig. 3 eine Hashkette H für die erste Einrichtung K1 und eine Hashkette H für die zweite Einrichtung K2 dargestellt, deren jeweiliges Anfangsglied der Start-Hashwert h0 ist.

Ausgehend von diesem Start-Hashwert h0 überträgt die erste Einrichtung K1 zu einem Zeitpunkt t1 eine erste Nachricht N1 an die zweite Einrichtung K2 in einem ersten Verfahrensschritt S1. Die erste Nachricht N1 kann insbesondere nur Daten D1 umfassen, so dass kein Overhead entsteht, wodurch der Kommunikationskanal Kk12 (siehe Fig. 1) entlastet wird. In einem zweiten Verfahrensschritt S2 berechnet die erste Einrichtung K1 auch einen Hashwert h1 in Abhängigkeit des Start-Hashwerts h0 und den Daten D1. Hierzu führt die erste Einrichtung K1 eine Hashfunktion F in Abhängigkeit der gesendeten Daten D1 und des Start-Hashwerts h0 aus. Das Ergebnis ist der Hashwert h1. Damit wird die Hashkette H der ersten Einrichtung K1 um ein Glied erweitert, wobei der nunmehr aktuelle Hashwert der Hashwert h1 ist. Auch die zweite Einrichtung K2, die die erste Nachricht N1 empfängt, berechnet den Hashwert h1 als Ergebnis der Hashfunktion F in Abhängigkeit des Start-Hashwerts h0 und der Daten D1, wodurch auch die Hashkette H der zweiten Einrichtung K2 um ein Glied erweitert wird.

In der Fig. 3 ist zu einem späteren Zeitpunkt t2 dieser Prozess in umgekehrter Richtung wiederholt dargestellt. Hierbei sendet die zweite Einrichtung K2 eine zweite Nachricht N2 umfassend Daten D2 an die erste Einrichtung K1. Wie zuvor berechnet jede der Einrichtungen K1, K2 einen Hashwert h2 als ein weiteres Glied der Hashkette H in Abhängigkeit der Daten D2 und des Hashwerts h1. Dabei kommt die gleiche Hashfunktion F zum Einsatz.

Diese beiden Verfahrensschritte S1, S2 des Übertragens einer Nachricht und des Berechnens eines Hashwerts werden wiederholt, bis zu einem Zeitpunkt tk+1 ein Überprüfen der Integrität der Kommunikation durchgeführt wird. Wann das erfolgt, kann in Abhängigkeit unterschiedlicher Faktoren oder Ereignisse festgelegt oder gewählt werden. In dem Beispiel der Fig. 3 wurden bis zu einem Zeitpunkt tk insgesamt k Nachrichten N1,...,Nk übertragen, als die Überprüfung gestartet wird.

Zum Überprüfen zu einem Zeitpunkt tk+1 überträgt die zweite Einrichtung K2 in einem dritten Verfahrensschritt S3 eine weitere Nachricht Nk+1, welche neben Daten Dk+1 insbesondere eine für den k-ten Hashwert hk indikative Information Ihk umfasst. Die indikative Information Ihk ist beispielsweise als ein HMAC-SHA-256 unter Nutzung des Hashwerts hk als Key realisiert. In einem vierten Verfahrensschritt S4 überprüft die erste Einrichtung K1 mittels der indikativen Information Ihk, ob der k-te Hashwert hk, den die zweite Einrichtung K2 für die Berechnung des HMAC-SHA-256 verwendet hat, dem k-ten Hashwert hk, den die erste Einrichtung K1 zuletzt berechnet hat, entspricht. Dies ist im Beispiel der Fig. 3 als eine Überprüfungsfunktion C dargestellt, die in Abhängigkeit des k-ten Hashwerts hk und der übermittelten indikativen Funktion Ihk evaluiert wird. Wenn die Überprüfung positiv ist, das heißt, die k-ten Hashwerte hk der beiden Hashketten H der ersten Einrichtung K1 und der zweiten Einrichtung K2 entsprechen einander, ist damit sichergestellt, dass die zuvor übertragenen k Nachrichten N1,...,Nk nicht manipuliert und fehlerfrei übertragen wurden. Die Integrität der Kommunikation ist damit bestätigt.

In der Fig. 3 ist ferner dargestellt, wie zu einem weiteren Zeitpunkt tk+2 die erste Einrichtung K1 die Überprüfung in der anderen Richtung anstößt, indem sie eine entsprechende weitere Nachricht Nk+2, die neben Daten Dk+2 eine für den k+1-ten Hashwert hk+1 indikative Information Ihk+1 umfasst, an die zweite Einrichtung K2 überträgt. Die zweite Einrichtung K2 führt dann die gleiche Überprüfung der Integrität der Kommunikation durch, indem sie die Überprüfungsfunktion C in Abhängigkeit des k+1-ten Hashwerts hk+1 und der für den k+1-ten Hashwert hk+1 indikativen Information Ihk+1 evaluiert. Dabei wird die k+1-te Nachricht Nk+1 von dieser Überprüfung ebenfalls erfasst, da die Daten Dk+1 in die Berechnung des k+1-ten Hashwerts hk+1 eingeflossen sind.

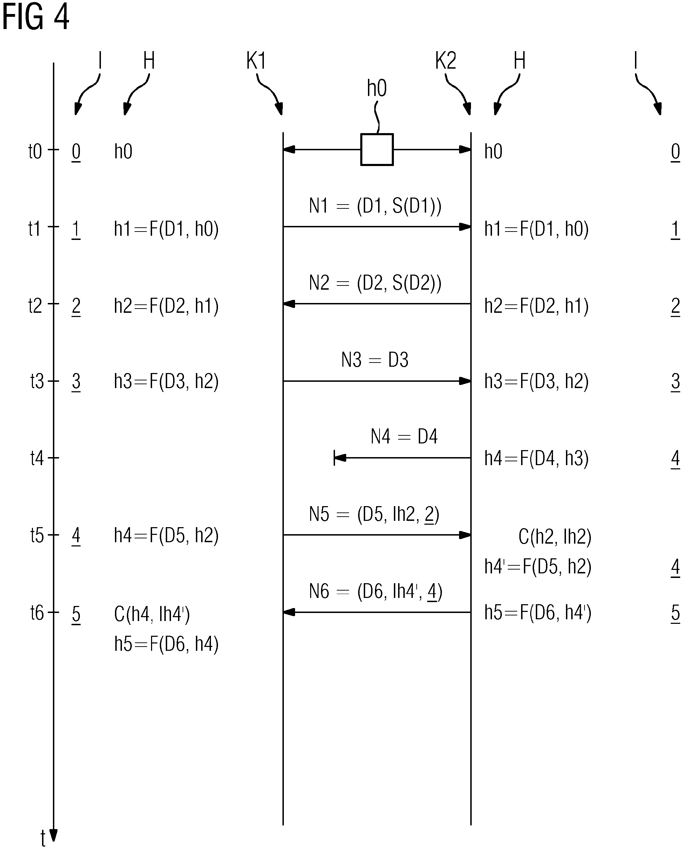

Fig. 4 zeigt ein schematisches Diagramm eines weiteren Ausführungsbeispiels einer Kommunikation zwischen zwei Einrichtungen K1, K2 entlang einer Zeitachse t, wobei die Kommunikation mittels eines nichtverlässlichen Protokolls erfolgt. Demnach kann es vorkommen, dass einzelne Nachrichten nicht beim Empfänger ankommen, ohne dass dies eine Fehlermeldung erzeugt.

Bei der ersten Einrichtung K1 und der zweiten Einrichtung K2 handelt es sich beispielsweise um das in der Fig. 1 dargestellte System 100. In dem dargestellten Beispiel ist das Anfangsglied der Hashkette H, welches als Start-Hashwert h0 dient, beispielsweise 0. Die Einrichtungen K1, K2 weisen zudem jeweils einen lokalen Cache auf, der eine Anzahl an Hashwerten mit zugeordnetem Index I zwischenspeichern kann. Der Start-Hashwert h0 weist beispielsweise den Index 0 auf. Der Cache wird von einer jeweiligen Einrichtung K1, K2 vorzugsweise derart genutzt, dass eine Abfolge von Hashwerten, die aufeinanderfolgenden Gliedern der jeweiligen lokalen Hashkette H entsprechen, darin abgelegt werden und durch den zugeordneten Index I abrufbar sind. Der Cache ist beispielsweise als ein volatiler RAM-Speicher ausgebildet.

Zu Beginn der Kommunikation erfolgt im Beispiel der Fig. 4 beispielsweise eine gegenseitige Authentisierung der Einrichtungen K1, K2. Zu einem Zeitpunkt t1 sendet die erste Einrichtung K1 eine erste Nachricht N1 an die zweite Einrichtung K2. Die erste Nachricht N1 umfasst beispielsweise Daten D1, die eine Anfrage zur Aufnahme der Kommunikation umfassen, und eine digitale Signatur S(D1), die die erste Einrichtung K1 in Abhängigkeit der Daten D1 erzeugt. Dabei berechnet die erste Einrichtung K1 einen ersten Hashwert h1 als Ergebnis einer Hashfunktion F in Abhängigkeit der Daten D1 und des Start-Hashwerts h0 und speichert diesen in dem Cache mit dem Index 1. Die zweite Einrichtung K2 empfängt die erste Nachricht N1, berechnet ebenfalls den Hashwert h1 und speichert diesen mit dem Index 1. Ferner überprüft die zweite Einrichtung K2 mittels der digitalen Signatur S(D1) und den Daten D1, ob die empfangene Nachricht N1 tatsächlich von der ersten Einrichtung K1 stammt.

Wenn dies der Fall ist, sendet die zweite Einrichtung K2 zu einem Zeitpunkt t2 eine entsprechende Antwort als eine zweite Nachricht N2 an die erste Einrichtung K1. Die zweite Nachricht umfasst Daten D2 sowie eine digitale Signatur S(D2), die die zweite Einrichtung K2 in Abhängigkeit der Daten D2 erzeugt. Ferner berechnet die zweite Einrichtung K2 einen zweiten Hashwert h2 und speichert diesen im Cache mit einem Index 2 ab. Die erste Einrichtung K1 empfängt die zweite Nachricht N2, überprüft deren Echtheit mittels der digitalen Signatur S(D2), berechnet einen zweiten Hashwert h2 und speichert diesen im Cache mit dem Index 2 ab.

Nun haben sich die beiden Einrichtungen K1, K2 gegenseitig authentisiert und sind damit bereit zur Kommunikation.

Die erste Einrichtung K1 sendet zu einem Zeitpunkt t3 beispielsweise eine dritte Nachricht N3, die ausschließlich Daten D3 umfasst, an die zweite Einrichtung K2. Beide Einrichtungen K1, K2 berechnen jeweils einen dritten Hashwert h3 mittels der Hashfunktion F in Abhängigkeit der Daten D3 und des zweiten Hashwerts h2 und speichern diesen in ihrem jeweiligen Cache mit dem Index 3 ab. Die Hashkette H jeder Einrichtung K1, K2 umfasst zu diesem Zeitpunkt t3 die vier Glieder h0, h1, h2 und h3.

Zu einem vierten Zeitpunkt t4 sendet die zweite Einrichtung K2 eine vierte Nachricht N4 mit Daten D4 ab und berechnet einen vierten Hashwert h4, den sie im Cache mit dem Index 4 ablegt. Die vierte Nachricht N4 geht auf dem Übertragungsweg verloren und erreicht die erste Einrichtung K1 nicht. Die erste Einrichtung K1 ist beispielsweise so konfiguriert, dass sie innerhalb eines vorbestimmten Zeitintervalls nach dem Senden einer Nachricht, hier der dritten Nachricht N3, eine Nachricht von dem Empfänger erwartet. Die erwartete Nachricht kann dabei Nutzdaten aufweisen und/oder eine Eingangsbestätigung darstellen. Da die vierte Nachricht N4 in diesem Beispiel verloren geht, stellt die erste Einrichtung K1 beispielsweise einen Timeout fest, wobei als Reaktion auf den Timeout eine Überprüfung der Kommunikation durchgeführt wird.

Daher sendet die erste Einrichtung K1 zu einem Zeitpunkt t5 eine fünfte Nachricht N5 an die zweite Einrichtung K2. Ferner berechnet die erste Einrichtung K1 einen vierten Hashwert h4 als Ergebnis der Hashfunktion F in Abhängigkeit der Daten D5 und des zweiten Hashwerts h2, da dieser der zuletzt empfangenen Nachricht N2 entspricht. Den vierten Hashwert speichert sie im Cache mit dem Index 4 ab. Die fünfte Nachricht N5 weist Daten D5, eine für den zweiten Hashwert h2 indikative Information Ih2 sowie den Index 2 auf. Die indikative Information Ih2 ist beispielsweise ein HMAC-SHA-256 unter Nutzung des zweiten Hashwerts h2 als Key.

Die zweite Einrichtung K2 empfängt die fünfte Nachricht N5 und startet die Überprüfung, indem sie die Überprüfungsfunktion C in Abhängigkeit der indikativen Information Ih2 und des Hashwerts, dessen Index die 2 ist, evaluiert. Hierzu lädt sie beispielsweise zunächst den Hashwert mit dem Index 2 aus ihrem Cache, was der zweite Hashwert h2 ist. In Abhängigkeit des zweiten Hashwerts h2 ermittelt sie dann den von ihr berechneten HMAC-SHA-256 und vergleicht diesen mit der mit der fünften Nachricht N5 empfangenen indikativen Information Ih2. Vorliegend stellt die zweite Einrichtung K2 fest, dass diese identisch sind. Demnach ist die Kommunikation bis zur zweiten Nachricht N2 verifiziert. Andererseits sind die beiden weiteren Nachrichten N3 und N4 nicht verifiziert. Daher verwirft die zweite Einrichtung K2 die gespeicherten Hashwerte h3, h4 aus ihrem Cache. Dafür berechnet die zweite Einrichtung K2 einen neuen vierten Hashwert h4', den sie im Cache mit dem Index 4 ablegt.

Um die Überprüfung beidseitig abzuschließen, sendet nunmehr die zweite Einrichtung K2 eine sechste Nachricht N6 zu der ersten Einrichtung K1. Diese umfasst Daten D6, eine für den neuen vierten Hashwert h4' indikative Information Ih4' sowie den Index 4. Die erste Einrichtung K1 überprüft daher mittels der Überprüfungsfunktion C, ob der vierte Hashwert h4, der den Index 4 aufweist, äquivalent zu der indikativen Information Ih4' ist. Ist dies der Fall, so ist die Kommunikation umfassend die erste Nachricht N1, die zweite Nachricht N2 und die fünfte Nachricht N5 verifiziert.

In diesem Beispiel konnte somit trotz der Verwendung eines nichtverlässlichen Protokolls die Integrität der Kommunikationsnachrichten trotz eines Nachrichtenverlusts überprüft werden, wobei lediglich zwei Nachrichten N3, N4 und deren zugehörige Hashwerte h3, h4 verworfen werden mussten. Der Vorteil der Verwendung des Caches liegt somit darin, dass bei Auftreten eines Übertragungsfehlers nicht die gesamte Kommunikation seit der letzten Überprüfung verworfen werden muss.

Obwohl die vorliegende Erfindung anhand von Ausführungsbeispielen beschrieben wurde, ist sie vielfältig modifizierbar. Insbesondere sind für die Ausführung der Hashfunktion F, der Überprüfungsfunktion C, und/oder weiterer kryptographischer Verfahren eine Vielzahl Variationen möglich. Ferner kann das Verfahren für eine Vielzahl von Übertragungsprotokollen implementiert werden.

## Patentansprüche

1. Verfahren zum Überprüfen einer Integrität einer Kommunikation zwischen einer ersten Einrichtung (K1) und einer zweiten Einrichtung (K2) umfassend eine Anzahl von k Nachrichten (N1,...,Nk), mit:
Bereitstellen (S0) eines Start-Hashwerts (h0) als ein Anfangsglied einer Hashkette (H) umfassend eine Abfolge von Hashwerten (h0,...,hk) für die erste Einrichtung (K1) und die zweite Einrichtung (K2),
Übertragen (S1) einer Abfolge der k Nachrichten (N1,...,Nk) zwischen der ersten Einrichtung (K1) und der zweiten Einrichtung (K2), wobei das Übertragen (S1) einer i-ten Nachricht der k Nachrichten (N1,...,Nk), mit 1 ≤ i ≤ k, ein Senden und/oder ein Empfangen der i-ten Nachricht umfasst,
Berechnen (S2) eines aktuellen Hashwerts der Hashkette (H) mit einem jeden Übertragen der i-ten Nachricht in Abhängigkeit eines in der Hashkette (H) dem aktuellen Hashwert vorhergehenden Hashwerts und von mit der i-ten Nachricht übertragenen Daten durch die erste Einrichtung (K1) und durch die zweite Einrichtung (K2),
Übertragen (S3) einer k+1-ten Nachricht (Nk+1) umfassend eine für den k-ten Hashwert (hk) indikative Information (Ihk), und
Überprüfen (S4) der Integrität der Kommunikation in Abhängigkeit des von der die k+1-te Nachricht (Nk+1) empfangenden Einrichtung (K1, K2) berechneten k-ten Hashwerts (hk) und der empfangenen k+1-ten Nachricht (Nk+1) durch die die k+1-te Nachricht (Nk+1) empfangende Einrichtung (K1, K2).

2. Verfahren nach Anspruch 1,
**dadurch gekennzeichnet,**
**dass** das Übertragen (S1) der k Nachrichten (N1,...,Nk) zwischen der ersten Einrichtung (K1) und der zweiten Einrichtung (K2) sequenziell erfolgt.

3. Verfahren nach Anspruch 1 oder 2,
**dadurch gekennzeichnet,**
**dass** das Bereitstellen (S0) des Start-Hashwerts (h0) kryptographisch gesichert erfolgt.

4. Verfahren nach einem Ansprüche 1 bis 3,
**gekennzeichnet durch**
gegenseitiges Authentisieren der ersten Einrichtung (K1) und der zweiten Einrichtung (K2).

5. Verfahren nach Anspruch 4,
**dadurch gekennzeichnet,**
**dass** das Authentisieren in Abhängigkeit des aktuellen Hashwerts der Hashkette (H) erfolgt.

6. Verfahren nach einem der Ansprüche 1 bis 5,
**dadurch gekennzeichnet,**
**dass** das Berechnen (S2) des aktuellen Hashwerts von der ersten Einrichtung (K1) und der zweiten Einrichtung (K2) individuell und unabhängig voneinander erfolgt.

7. Verfahren nach einem der Ansprüche 1 bis 6,
**gekennzeichnet durch**
Übertragen einer k+2-ten Nachricht (Nk+2) umfassend eine für den k+1-ten Hashwert (hk+1) indikative Information (Ihk+1), und
Überprüfen der Integrität der Kommunikation in Abhängigkeit des von der die k+2-te Nachricht (Nk+2) empfangenden Einrichtung (K1, K2) berechneten k+1-ten Hashwerts (hk+1) und der empfangenen k+2-ten Nachricht (Nk+2) **durch** die die k+2-te Nachricht (Nk+2) empfangende Einrichtung (K1, K2).

8. Verfahren nach einem der Ansprüche 1 bis 7,
**dadurch gekennzeichnet,**
**dass** das Übertragen (S3) der k+1-ten Nachricht (Nk+1) umfassend die für den k-ten Hashwert (hk) indikative Information (Ihk) und/oder das Übertragen der k+2-ten Nachricht (Nk+2) umfassend die für den k+1-ten Hashwert (hk+1) indikative Information (Ihk+1) kryptographisch geschützt erfolgt.

9. Verfahren nach einem der Ansprüche 1 bis 8,
**dadurch gekennzeichnet,**
**dass** jede der k+2 Nachrichten (N1,..., Nk+2) eine bestimmte Priorität aus einer Mehrzahl von vorbestimmten Prioritäten aufweist, wobei verschiedene Nachrichten in Abhängigkeit ihrer jeweiligen Priorität übertragen und/oder verarbeitet werden.

10. Verfahren nach einem der Ansprüche 1 bis 9,
**dadurch gekennzeichnet,**
**dass** das Berechnen (S3) des i-ten Hashwerts zusätzlich in Abhängigkeit einer vorbestimmten Information erfolgt.

11. Verfahren nach einem der Ansprüche 1 bis 10, **gekennzeichnet durch**
Zwischenspeichern einer Anzahl von m Hashwerten der Hashkette (H) **durch** die erste Einrichtung (K1) und die zweite Einrichtung (K2), wobei die Anzahl den aktuellen Hashwert und die m-1 dem aktuellen Hashwert vorhergehenden Hashwerte der Hashkette (H) umfasst, wobei jedem zwischengespeicherten Hashwert ein Index (I)zugeordnet wird,
Auswählen desjenigen Hashwerts aus der Anzahl von m Hashwerten, der mit der zuletzt empfangenen Nachricht berechnet wurde,
Übertragen der k+1-ten Nachricht (Nk+1) umfassend eine für den ausgewählten Hashwert indikative Information und den dem ausgewählten Hashwert zugeordneten Index, und
Überprüfen der Integrität der Kommunikation in Abhängigkeit des von der die k+1-te Nachricht (Nk+1) empfangenden Einrichtung (K1, K2) zwischengespeicherten Hashwerts, dem der gleiche Index zugeordnet ist, und der empfangenen k+1-ten Nachricht (Nk+1) **durch** die die k+1-te Nachricht (Nk+1) empfangende Einrichtung (K1, K2).

12. Verfahren nach Anspruch 11,
**dadurch gekennzeichnet,**
**dass** die Anzahl an zwischenzuspeichernden Hashwerten in Abhängigkeit eines Parameterwerts eines vorgegebenen Parameters dynamisch angepasst wird, wobei der vorgegebene Parameter ein eine Qualität einer Kommunikationsverbindung zwischen der ersten Einrichtung (K1) und der zweiten Einrichtung (K2) beschreibenden Parameter, ein Ladezustand einer Energieversorgung für eine der Einrichtungen (K1, K2), eine Anzahl von Einrichtungen (K1, K2) in einem Netzwerk umfassend eine Mehrzahl an Einrichtungen (K1, K2) und/oder eine Routing-Information umfasst.

13. Verfahren nach einem der Ansprüche 1 bis 12,
**dadurch gekennzeichnet,**
**dass** der Schritt des Überprüfens (S4)
- in Abhängigkeit einer verstrichenen Zeitdauer seit dem Bereitstellen (S0) des Start-Hashwerts (h0),
- in Abhängigkeit einer verstrichenen Zeitdauer seit dem Übertragen (S1) einer ersten Nachricht (N1),
- in Abhängigkeit einer verstrichenen Zeitdauer seit dem letzten Empfangen einer Nachricht,
- in Abhängigkeit eines Übertragens (S1) einer Nachricht mit einer vorbestimmten Priorität
- in Abhängigkeit einer Anfrage zum Überprüfen, und/oder
- in Abhängigkeit einer vorbestimmten Anzahl k an übertragenen Nachrichten (N1,...,Nk)
durchgeführt wird.

14. Computerprogrammprodukt, welches auf einer programmgesteuerten Einrichtung die Durchführung des Verfahrens nach einem der Ansprüche 1 bis 13 veranlasst.

15. System (100) mit einer ersten Einrichtung (K1) und einer zweiten Einrichtung (K2), wobei die erste Einrichtung (K1) und die zweite Einrichtung (K2) zur Kommunikation miteinander eingerichtet sind,
**dadurch gekennzeichnet,**
**dass** die erste Einrichtung (K1) und die zweite Einrichtung (K2) zum Überprüfen der Integrität der Kommunikation mittels eines Verfahrens nach einem der Ansprüche 1 bis 13 eingerichtet sind.
